# EUROPEAN PATENT APPLICATION

(11) **EP 4 310 551 A2**
(43) Date of publication of application: **24.01.2024**
(21) Application number: 23206438.6
(22) Date of filing: 20.09.2019
(51) Int. Cl.: G01S 17/931

(54) **A METHOD FOR REDUCING THE AMOUNT OF SENSOR DATA FROM A FORWARD-LOOKING VEHICLE SENSOR**

(62) Divisional of application: 19198532.4
(71) Applicant: Arriver Software AB, 583 30 Linköping (SE)
(72) Inventor: Grubeck, Hans, Stockholm (SE); Lovtjarn, Andre, Stockholm (SE); Bjorkeson, Felix, Stockholm (SE); Shitoshna, Nepal, Lowell (US)
(74) Representative: Loveless, Ian Mark

(57) **Abstract**

The present disclosure relates to a method for reporting sensor data from a vehicle sensor (110) to a sensor data processing system (120). The method comprises obtaining (S1) an estimated road surface geometry (121) in a first region (118) that is positioned in a vicinity of the vehicle sensor (110), obtaining (S2) a predicted road surface geometry (122) in a second region (119) that is positioned beyond the first region (118), and obtaining (S3) one or more sensor detections (160, 170) in the second region (119). The method further comprises determining (S4) a first sub-set of sensor detections (160) out of the one or more sensor detections (160, 170) in the second region (119) by selecting sensor detections comprised within the predicted road surface geometry (122), and reporting (S5) the first sub-set of sensor detections (160) as sensor data.

## Description

The present disclosure relates to methods and devices for reporting sensor data from a vehicle sensor to a sensor data processing system, such as a sensor fusion unit or vehicle electronic control unit (ECU). The disclosed techniques are applicable, e.g., to Light Detection and Ranging (LIDAR) vehicle sensors.

Modern vehicles often comprise a large number of sensor devices, such as radio detection and ranging sensors (RADAR), LIDAR, and vision-based sensors. Each sensor samples its respective field of view, and reports sensor data to some type of processing device.

The reported information can be basic sensor measurement data, such as raw sensor samples. Alternatively, more intelligence can be added to the sensor devices in order to extract features from the raw sensor data, e.g., object detection lists and the like.

Of particular importance in vehicular applications is the detection and reporting of obstacles in vicinity of an ego vehicle, and most importantly on a road surface region towards which the ego vehicle is heading.

The amount of sensor data, or the number of sensor detections generated by the sensors of a vehicle, may become prohibitively large. A sensor data processing system may not be able to handle such large volumes of data. It is therefore preferred to limit the number of detections to a subset of detections by discarding unimportant sensor detections. However, it is not straight forward to select which sensor detections to report and which sensor detections to disregard. This can be due to that at some range, the road is not visible for the vehicle sensor devices, for example, for LIDAR, at longer distances the grazing angle of the laser beam hitting the road may be so low that no ground return is detected.

It is an object of the present disclosure to present improved methods and devices for reporting sensor data from a sensor device to a sensor data processing system.

This object is achieved by means of a method for reporting sensor data from a vehicle sensor to a sensor data processing system. The method comprises obtaining an estimated road surface geometry in a first region that is positioned in a vicinity of the vehicle sensor, obtaining a predicted road surface geometry in a second region that is positioned beyond the first region, and obtaining one or more sensor detections in the second region. The method further comprises determining a first sub-set of sensor detections out of the one or more sensor detections in the second region by selecting sensor detections comprised within the predicted road surface geometry and reporting the first sub-set of sensor detections as sensor data.

In this way, the number of detections can be limited to a subset of detections by mainly reporting the detections associated with a road surface where the vehicle may be heading towards. The remaining detections, i.e., the detections not comprised in the first sub-set may be discarded, or otherwise marked as detections associated with lower importance.

According to some aspects, the method comprises obtaining one or more sensor detections in the first region and determining a second sub-set of sensor detections out of the one or more sensor detections in the first region by selecting sensor detections comprised within the estimated road surface geometry. The method further comprises reporting the second sub-set of sensor detections together with the first sub-set of sensor detections as the sensor data.

In this way, the number of reported detections can be limited to mainly reporting detections which are comprised either within the road surface region in vicinity of the vehicle or within the predicted road surface region beyond the vehicle. Thus, advantageously, the detections deemed most important are prioritized over detections deemed to be of less importance.

According to some aspects, the method comprises obtaining the estimated road surface geometry based on sensor data acquired by the vehicle sensor, wherein the sensor data is associated with a sensor field of view up to a sensor field horizon.

In this way, the estimated road surface geometry can be determined in a reliable manner.

According to some aspects, the method comprises obtaining a predicted road surface geometry in the second region based on a clothoid model.

According to some aspects, the clothoid model is used to construct a piecewise linear widening of the estimated road surface geometry where a clothoid construct is parameterized based on the estimated road surface geometry.

In this way, the predicted road surface geometry can be determined in a reliable manner without large computational burden.

According to some aspects, alternatively or as a complement, the method comprises obtaining a predicted road surface geometry in the second region based on a maximum vehicle lateral acceleration, or curvature extrapolation of the estimated road surface geometry in the first region.

In this way, the predicted road surface geometry can be refined compared to, e.g., the straight line extrapolation method. According to some aspects, the method comprises obtaining a predicted road surface geometry in the second region based on at least one of:
- A velocity of the vehicle sensor.
- A detection of a target object beyond the first region.
- A detected obstacle.
- Obtained map data.

In this way, the predicted road surface geometry can be determined with increased reliability taking different factors into account.

This way the sensor data processing system obtains additional information relating to the reported sensor data, and is therefore able to, e.g., make more informed decisions for, e.g., controlling the vehicle.

According to some aspects, the method comprises receiving parameters related to a preferred road surface geometry and determining a difference road surface geometry within a sensor field of view where there is no overlap between, on one hand, the preferred road surface geometry and, on the other hand, the estimated road surface geometry and the predicted road surface geometry.

This enables an external system, such as the sensor data processing system, to influence the reporting of detections. The external system can influence the reporting to cause both an increase and a decrease in the number of reported detections by parameterizing the prediction of road surface accordingly.

According to some aspects, the method comprises reporting the difference road surface geometry together with associated detections, and/or reporting the estimated road surface geometry and the predicted road surface geometry together with their respective associated reported detections.

This enables an external system, such as the sensor data processing system, to influence the reporting of detections. The sensor data processing system acquires information regarding the estimated and predicted road surface geometries and can, based on this, optionally adapt a future preferred road surface geometry.

This object is also achieved by means of a sensor data processing system, a vehicle and a remote server which are associated with the above advantages.

### BRIEF DESCRIPTION OF THE DRAWINGS

The present disclosure will now be described in detail with reference to the appended drawings, where:
Figure 1 shows a schematic top view of a vehicle with a sensor system;
Figures 2-6 illustrate road surface geometry prediction;
Figure 7 is a flow chart illustrating methods;
Figure 8 schematically illustrates a vehicle sensor system; and
Figure 9 shows an example computer program product;

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

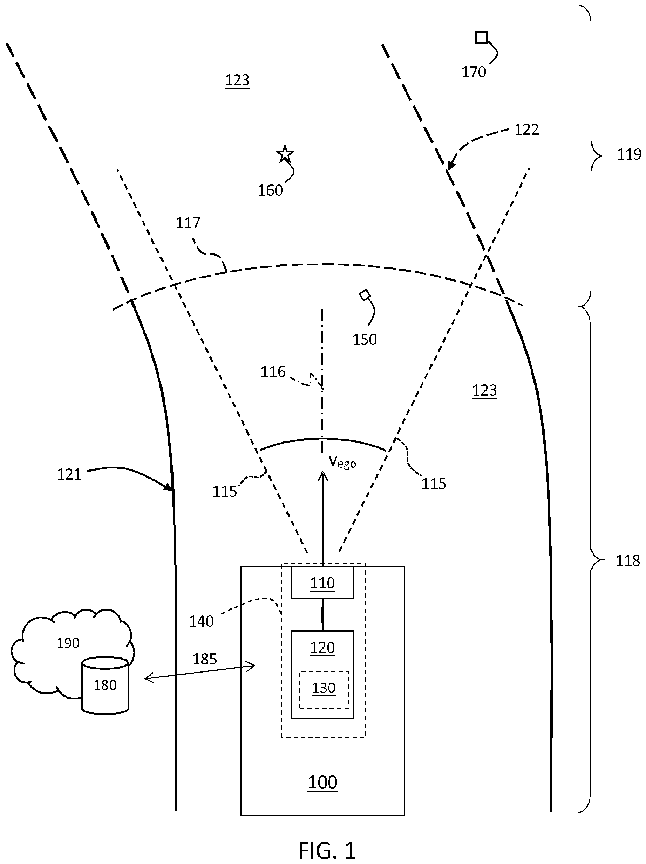

Figure 1 shows a schematic top view of a vehicle 100 equipped with a vehicle sensor system 140. The vehicle moves on a road 123 in a direction with velocity vector v_{ego}. The vehicle sensor system 140 comprises a vehicle sensor 110 and a sensor data processing system 120. An optional storage module 130 may also be comprised in the vehicle sensor system 140. The storage module 130 will be discussed in more detail below.

The sensor data processing system 120 is arranged to control operation of the vehicle sensor 110, and to obtain data from the vehicle sensor, such as detections or data points corresponding to objects 150, 160 in vicinity of the vehicle 100.

The vehicle sensor 110 may comprise a single sensor unit or a plurality of sensor units, potentially of different type and/or of different configuration. For instance, the vehicle sensor 110 may comprise any of a LIDAR sensor, a RADAR sensor, a camera sensor, or an ultrasound sensor. The vehicle sensor 110 may also comprise any of a TOF camera system, a structured light system, and a stereo vision system.

According to an example, the vehicle sensor 110 is arranged to generate a number of data points comprising coordinates in a relative coordinate system, i.e., relative to the location and orientation of the sensor. The coordinates may be Cartesian coordinates or they may be polar coordinates. The vehicle sensor 110 may also be arranged to generate raw data, or a more refined feature vector extracted from the sensor data.

The data points may also comprise additional information, such as light intensity values, colour data, signal strength values, frequency values, and measures of signal-to-noise ratio (SNR).

One or more timestamps may also be associated with the information passing between the vehicle sensor 110 and the sensor data processing system 120. The time stamps may be assigned per data point or be common to a set of data points. A LIDAR system using a rolling shutter would most likely assign one-time stamp per data point, but it is also plausible to assign a single time stamp per scan or per data set, albeit with loss of accuracy.

The storage module 130 may store map data comprising information about a surrounding environment of the vehicle 100. Such map data can either be built, i.e., created at the vehicle 100 from the current measurements, or pre-built. If it is pre-built, the system knows what the road looks like ahead, and it is easier to know if a detected object is on the road or not. Also, a combination of built and pre-built map data is conceivable.

The vehicle sensor system 140 may be connected via wireless link 185 to a remote server 180, which in turn may be comprised in a remote network 190. By means of the wireless link 185, for example, road predictions, map data and possible objects can be reported to and/or received from the remote server 180. Such possible objects can either be objects reporting their own location, or objects previously characterized by the vehicle or by some other vehicle.

Generally, the remote server 180 arranged to be connected to any of a vehicle 100, a vehicle sensor data processing system 120, and/or a vehicle sensor 110. The remote server 180 is configured to receive data relating to a road surface geometry from the vehicle 100, vehicle sensor data processing system 120, and/or vehicle sensor 110, and/or to provide data related to a road surface geometry to the vehicle 100, vehicle sensor data processing system 120, and/or vehicle sensor 110. The vehicle sensor 110 is associated with a sensor field of view 115, which may be a 360-degree field of view, or a more limited field of view as shown in Figure 1. Three objects 150, 160, 170 are located in the field of view 115. A first object 150 generates a data point marked by a diamond. A second object 160 generates a data point marked by a star, and a third object 170 generates a data point marked by a square. The first object 150 and the second object 160 are located on the road surface and therefore represent important obstacles, whereas the third object 170 is located outside of the drivable area and is therefore not as important to report as the first and the second objects.

Herein, object detections are associated with an importance level, meaning that some objects are deemed to be more important to report and to process compared to other objects. It is appreciated that many different factors and aspects may influence a final object importance classification. However, to not overly complicate the disclosure, importance is herein assumed connected to the object being located on a drivable surface towards which the vehicle is heading or not. If the object is not on a drivable surface, then collision between the object and the vehicle is less likely to be an issue compared to if the object is located on the road surface ahead of the vehicle.

The road surface geometry close to the vehicle can be estimated by means of the LIDAR sensor data, for instance, LIDAR sensor detections can be obtained related to the road itself, i.e., ground reflections, to curbs, and also road markings. However, at longer distances the grazing angle of the laser beam hitting the road may be so low that no ground return is detected. Thus, at some range 117 the road is not visible for the vehicle sensor 110, and it therefore becomes difficult to estimate road surface geometry based on LIDAR sensor data. The range 117 is therefore similar to a sensor field horizon. A general problem for not being able to detect a ground return is that the SNR is too low for the vehicle sensor 110, where the grazing angle, i.e., the angle between the incoming laser beam or ray of light and the road surface plane, affects the SNR.

Moreover, other road related objects, such as lane markings, curbs or other road boundaries may also fail to be detected due to the range.

Most LIDAR transceivers use a beam scanning architecture where a laser is pointed in sequence at different locations in a matrix pattern. The distance between laser points therefore increases with distance. In other words, the laser spot separation in meters measured along a direction orthogonal to the boresight direction increases with distance. Some smaller objects such as curbs may therefore not be illuminated by the laser and can therefore not be detected. When a laser point fails to hit and/or reach a target, the detection range may therefore be limited. The maximum detection range is likely different for road surface and the curbs, since the road surface is a continuous surface that is always illuminated at some point by the laser. In all such cases with range limitations, the system does not have any estimates of the road surface geometry.

The vehicle surroundings can be divided into two regions. A first region 118 that is positioned close to the vehicle 100 is associated with relatively good estimates of road surface geometry, while a second region 119 further from the vehicle 100, positioned beyond the first region 118 is associated with less precise or even non-existent estimates of road surface geometry. A sensor field horizon 117 may as mentioned above separate the two regions 118, 119. It is appreciated that the two regions 118, 119 are not abruptly separated per se, rather, the road surface geometry estimates gradually gets worse until they are no longer reliable enough to be used for vehicular applications. In other words, the information relating to road surface geometry is likely to decrease with increasing distance. However, it is appreciated that the sensor field horizon is scenario dependent. Some roads, for instance, have lane marking that are more easily detectable to a lidar, such as road fences and the like, whereas other roads are only delimited by a change of road surface from, e.g., concrete to grass or dirt.

Beyond the sensor field horizon 117, road surface geometry estimates directly obtained from sensor data are not reliable enough for use in some vehicular applications such as autonomous driving.

Obstacles detected on or close to the road 123 are most likely important and should therefore be reported with high priority to the sensor data processing system 120 by the vehicle sensor 110. Obstacle detections 150 in the first region 188 can be determined to either be positioned on the road 123, in which case they are likely important, or to be located to the side of the drivable area of the rod 123, in which case they may be of less importance.

In the former case, when obstacle detections 150 in the first region 118 are determined to be positioned on the road 123, they are most likely important and therefore reported to the sensor data processing system 120. However, the detections 160, 170 made in the second region 119 may or may not be important, since they may be located on the road, in which case they are likely important, or located to the side of the drivable area of the road 123, in which case they may be of less importance.

Obstacles in the second region 119 may need to be reported for soft breaking or path planning purposes. However, without knowledge of the road surface geometry in the second region 119, there is no easy way to limit the number of candidate obstacles to report to the sensor data processing system. If all candidates are reported, this may be overwhelming for the receiving fusion system, i.e., the sensor data processing system 120. If instead no obstacles outside the first region 118, are reported, then there may be obstacles too close to the ego vehicle 100 to provide soft breaking or even to avoid collision in some cases.

The solution presented herein involves providing a predicted road surface geometry 122 beyond the sensor field horizon 117, in the second region 119.

Sensor detections comprised within the predicted road surface geometry 122 can then be reported, while other detections in the second region 119 can be discarded or at least marked as being associated with a reduced importance level. This way, the amount of reported sensor data can be reliably reduced without affecting system performance significantly.

According to some aspects, normally, an estimated road surface geometry 121 in the first region 118 is obtained, such that it can be determined whether the sensor detections in the first region 118 are comprised within the estimated road surface geometry 121 or not. Only sensor detections 150 comprised within the estimated road surface geometry 121 can then be reported, while other detections in the first region 118 can be discarded or at least marked in some way as being associated with a reduced importance level compared to the detection comprised within the estimated road surface geometry 121. Optionally, the reports are complemented with the respective region of the detected objects.

The prediction of road surface geometry beyond the sensor field horizon 117 can be performed in a number of different ways with varying complexity.

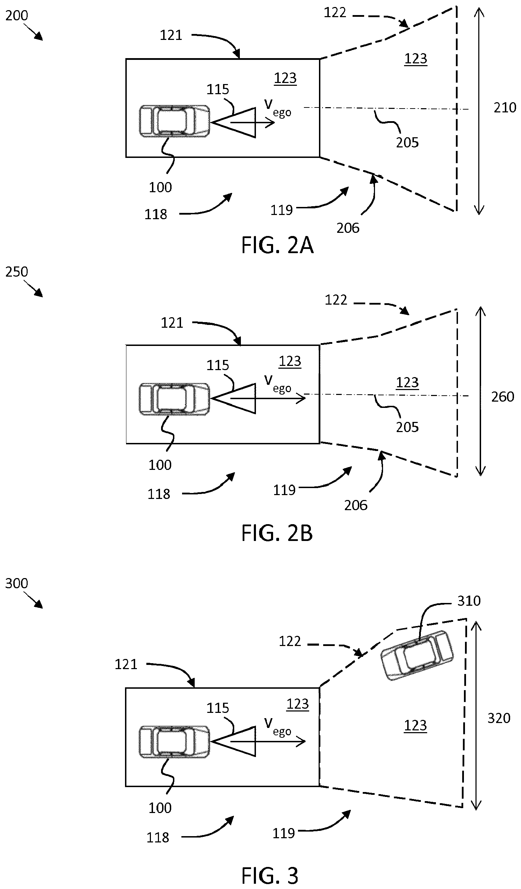

Figures 2A and 2B illustrate two scenarios 200 and 250. In both scenarios, the estimated road surface geometry 121 of the first region 118 is reliably obtained based on, e.g., sensor data, which is possible since the first region 118 is located relatively close to the vehicle sensor 110. In the second region 119 positioned beyond the first region 118 (with respect to the vehicle 100), the predicted road surface geometry 122 is here obtained based on an extrapolation of the first region road surface geometry. This extrapolation may be determined in a number of different ways, e.g., by extending an estimated center line 205 of the road and linearly increasing a width 210, 260 of the predicted road surface geometry 121.

Figure 2A and 2B provide another example of the above-mentioned extrapolation of the first region road surface geometry; In Figure 2A, the extrapolation is based on a clothoid model which is used to construct a piecewise linear widening of the estimated road surface geometry where a clothoid construct is parameterized based on the estimated road surface geometry. The predicted road surface geometry 122 then has an increased widening rate at discrete points 206. In Figure 2B, the widening rate is reduced in dependence of a vehicle ego velocity. In the first scenario 200, the ego vehicle 100 has a relatively low ego velocity v_{ego}. The predicted road surface geometry 122 therefore has a first width 210 that is estimated as relatively wide, since the vehicle 100 may turn abruptly due to the low velocity. In Figure 2B, the vehicle velocity v_{ego} is larger compared to in Figure 2A. In this case, the predicted road surface geometry 122 is predicted to have a second width 260 that is narrower compared to the second width 210 of the predicted road surface geometry 122 in Figure 2A.

Figure 3 shows a scenario 300 where another vehicle 310 is detected. The predicted road surface geometry 122 may be initially obtained, e.g., as in the example of Figures 2A and 2B. However, in this case, the obtaining of the predicted road surface geometry 122 can be extended to cover the detected vehicle 310. I.e., the predicted road surface geometry 122 is predicted to have an extended width 320 that comprises the detected vehicle 310, which is likely located on a drivable surface.

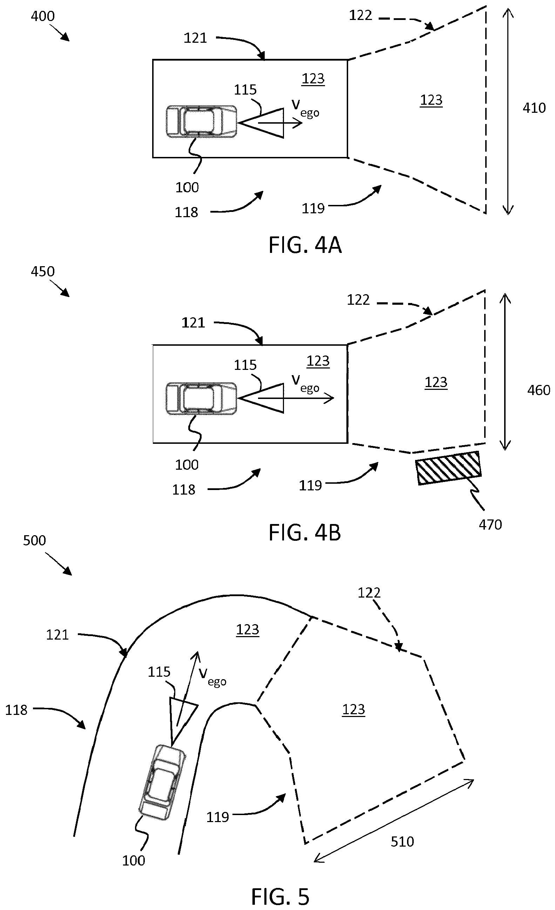

Figures 4B illustrates an example scenario 450 where a large obstacle 470, such as a building or a wall, is detected in the second region 119 beyond the first region 118. In this case, the predicted road surface geometry 122 is predicted to have a reduced 460 width compared to a width 410 in a corresponding scenario 400 in Figure 4A where no such obstacle is detected. In other words, the detection of the large obstacle is used to adjust the prediction of road surface geometry. The predicted road surface geometry 122 may be initially obtained, e.g., as in the example of Figures 2A and 2B. Alternatively, if the prediction is made using e.g. a so-called deep learning algorithm or similar, then the prediction can be obtained in only one step.

Figure 5 shows another example scenario 500 of obtaining the predicted road surface geometry 122. Here, the estimated road surface geometry 121 is a turn associated with some curvature. The predicted road surface geometry 122 is here predicted by extrapolating the turn with a certain increasing width 510.

The model used for extrapolating the turn may, e.g., be based on a clothoid model. In this case a clothoid is parameterized based on the estimated road surface geometry. The road surface geometry beyond the estimated geometry can then be predicted by extrapolating the clothoid geometry.

The model can also be based on an assumed maximum lateral acceleration by the vehicle. This means that the road surface is limited in curvature to such curvatures which can be negotiated without a lateral acceleration above the assumed maximum lateral acceleration. The road surface geometry beyond the estimated geometry can then be predicted by extrapolating the turn curvature up to curvatures implying a vehicle lateral acceleration beyond the assumed maximum lateral acceleration.

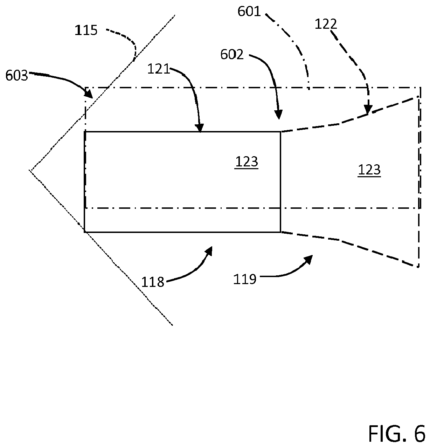

Figure 6 shows road surface geometries in the field of view 115.

With reference to Figure 1 and Figure 6, the sensor data processing system 120 is adapted to provide a preferred road surface geometry 601 to the vehicle sensor 110, where the preferred road surface geometry 601 indicates where the road is running according to the sensor data processing system 120. The vehicle sensor 110, having determined the estimated road surface geometry 121 and the predicted road surface geometry 122, can determine a difference road surface geometry 602 within a sensor field of view 115 where there is no overlap between, on one hand, the preferred road surface geometry 601 and, on the other hand, the estimated road surface geometry 121 and the predicted road surface geometry 122.

Optionally, the vehicle sensor 110 is adapted to report the difference road surface geometry 602 and possible detections within the difference road surface geometry 602 to the sensor data processing system 120.

According to some aspects, the vehicle sensor 110 is further adapted to report the estimated road surface geometry 121 and the predicted road surface geometry 122 to the processing system 120. All reported road surface geometries 121, 122, 602 are to be within the field of view 115. In Figure 6, this means that a part 603 of the original non-overlapping difference road surface geometry is not comprised in the reported difference road surface geometry 602.

According to some aspects, all reported detections are associated with a corresponding reported road surface geometry 121, 122, 602.

In this manner, the sensor data processing system 120 acquires information regarding the estimated and predicted road surface geometries and can, based on this, optionally adapt a future preferred road surface geometry if desired.

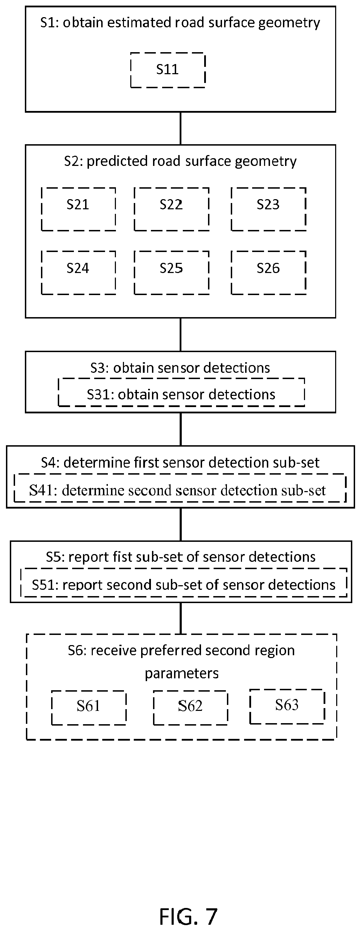

Figure 7 is a flow chart showing methods that summarize the discussions above. There is illustrated a method for reporting sensor data from a vehicle sensor 110 to a sensor data processing system 120. The method comprises obtaining an estimated road surface geometry 121 in a first region 118 that is positioned in a vicinity of the vehicle sensor 110.

As discussed above, the estimated road surface geometry 121 can often be determined from sensor data. This is for instance the case if the vehicle sensor is a LIDAR sensor, since the grazing angle close to the vehicle is large enough to receive reflections from the road surface. In other words, according to some aspects, the method comprises obtaining S11 the estimated road surface geometry 121 based on sensor data acquired by the vehicle sensor 110, wherein the sensor data is associated with a sensor field of view 115 up to a sensor field horizon 117.

The method also comprises obtaining S2 a predicted road surface geometry 122 in a second region 119 that is positioned beyond the first region 118. The obtaining S2 of the predicted road surface geometry 122 can be performed in a number of different ways, as was discussed above. For instance;

According to some aspects the predicting comprises obtaining S21 a predicted road surface geometry in the second region 119 based on a clothoid model, where, according to some further aspects, the clothoid model is used to construct a piecewise linear widening of the estimated road surface geometry where a clothoid construct is parameterized based on the estimated road surface geometry.. An example of this type of prediction was discussed above in connection to Figures 2A and 2B.

According to some other aspects the predicting comprises obtaining S22 a predicted road surface geometry 122 in the second region 119 based on a clothoid model, a maximum vehicle lateral acceleration, or curvature extrapolation of the estimated road surface geometry 121 in the first region 118. An example of this types of predictions were discussed above in connection to Figure 5.

According to some aspects, the linear-, clothoid- or max acceleration extrapolation applies to all cases described, as well as other conceivable alternatives.

According to some further such aspects the predicting comprises obtaining S23 a predicted road surface geometry 122 in the second region 119 based on a velocity V_{ego} of the vehicle sensor 110. An example of this type of prediction was discussed above in connection to Figure 2A and 2B.

According to other such aspects the predicting comprises obtaining S24 a predicted road surface geometry 122 in the second region 119 based on a detection of a vehicle 310 in the second region 119. An example of this type of prediction was discussed above in connection to Figure 3. Generally, the vehicle in the second region 119 can be any suitable target object 310, such as for example pedestrians walking along the road 123.

According to further such aspects the predicting comprises obtaining S25 a predicted road surface geometry 122 in the second region 119 based on a detected obstacle 470. This type of prediction was exemplified in connection to Figures 4A and 4B above.

According to even further such aspects the predicting comprises obtaining S26 a predicted road surface geometry 122 in the second region 119 based on obtained map data. The map data may, e.g., be obtained via wireless link from a remote server 180, or from local storage 130.

According to some aspects, the predicting is made by means of machine learning, typically deep learning, where the influence of constructions along the road and actor behaviors, such as vehicle motion and pedestrian motion etc. can be understood.

The method also comprises obtaining S3 one or more sensor detections 160, 170 in the second region 119, determining S4 a first sub-set of sensor detections 160 out of the one or more sensor detections 160, 170 in the second region 119 by selecting sensor detections comprised within the predicted road surface geometry 122, and reporting S5 the first sub-set of sensor detections 160 as sensor data.

This way, a reduced number of sensor detections can be reported S5 as sensor data for the second region 119, i.e., all obtained sensor detections are not reported, only those comprised in the sub-set of sensor detections.

According to some further aspects, the method also comprises obtaining S31 one or more sensor detections 150 in the first region 118, and determining S41 a second sub-set of sensor detections 150 out of the one or more sensor detections 150 in the first region 118 by selecting sensor detections comprised within the estimated road surface geometry 121. The method then comprises reporting S51 the second sub-set of sensor detections 150 together with the first sub-set of sensor detections 160 as the sensor data.

In Figure 1, there is only one sensor detection 150 shown in the first region 118, where that sensor detection 150 also is comprised within the estimated road surface geometry 121. There may of course be sensor detections in the first region 118 that are not comprised within the estimated road surface geometry 121, not being comprised in the second sub-set of sensor detections. It is to be understood that there normally is a multitude of sensors detections in the regions 118, 119; those shown are only for explaining the proposed techniques.

The method may also comprise receiving S6 parameters related to a preferred road surface geometry 601 and determining S61 a difference road surface geometry 602 within the sensor field of view 115 where there is no overlap between, on one hand, the preferred road surface geometry 601 and, on the other hand, the estimated road surface geometry 121 and the predicted road surface geometry 122.

According to some aspects, the method also comprises reporting S62 the difference road surface geometry 602 and possible associated detections within the difference road surface geometry 602 to the sensor data processing system 120.

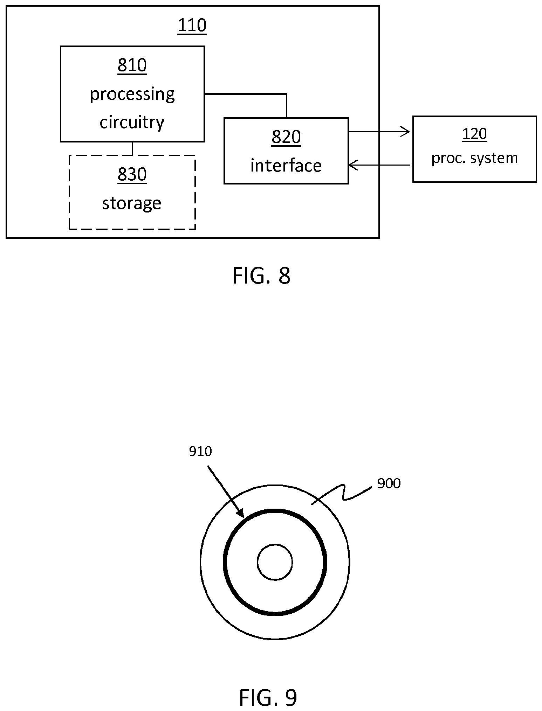

According to some aspects, the method also comprises reporting S63 the estimated road surface geometry 121 and the predicted road surface geometry 122 to the processing system 120 with their associated reported detections 150, 160. All reported road surface geometries 121, 122, 602 are to be within the field of view 115. In Figure 6, this means that a part 603 of the original non-overlapping difference road surface geometry is not comprised in the reported difference road surface geometry 602.S6The methods and techniques discussed above can be realized in various forms of hardware. Figure 8 schematically illustrates, in terms of a number of functional units, the components of a vehicle sensor 110 according to an embodiment of the above discussions. Processing circuitry 810 is provided using any combination of one or more of a suitable central processing unit CPU, multiprocessor, microcontroller, digital signal processor DSP, etc., capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the vehicle sensor 110 to perform a set of operations, or steps. For example, the storage medium 830 may store the set of operations, and the processing circuitry 810 may be configured to retrieve the set of operations from the storage medium 830 to cause the vehicle sensor 110 to perform the set of operations. The set of operations may be provided as a set of executable instructions. Thus, the processing circuitry 810 is thereby arranged to execute methods as herein disclosed.

The storage medium 830 may also comprise persistent storage, which, for example, can be any single one or combination of magnetic memory, optical memory, solid state memory or even remotely mounted memory.

The vehicle sensor 110 may further comprise a communications interface 820 for communications with at least one external device such as the sensor data processing system. As such the communication interface 820 may comprise one or more transmitters and receivers, comprising analogue and digital components and a suitable number of ports for wireline or wireless communication.

The processing circuitry 810 controls the general operation of the vehicle sensor 110 e.g. by sending data and control signals to the communication interface 820 and the storage medium 830, by receiving data and reports from the communication interface 820, and by retrieving data and instructions from the storage medium 830. Other components, as well as the related functionality, of the vehicle sensor 110 are omitted in order not to obscure the concepts presented herein.

The sensor data processing system 120 is adapted to obtain an estimated road surface geometry 121 in a first region 118 that is positioned in a vicinity of the vehicle sensor 110, obtain a predicted road surface geometry 122 in a second region 119 that is positioned beyond the first region 118, and to obtain one or more sensor detections 160, 170 in the second region 119.

The sensor data processing system 120 is further adapted to determine a first sub-set of sensor detections 160 out of the one or more sensor detections 160, 170 in the second region 119 by selecting sensor detections comprised within the predicted road surface geometry 122, and to report the first sub-set of sensor detections 160 as sensor data.

Figure 9 shows a computer program product 900 comprising computer executable instructions 910. The computer executable instructions may, e.g., be executed by a vehicle sensor 110 as described above to perform the herein disclosed methods.

The present disclosure also relates to a vehicle 100 comprising a vehicle sensor 110 according to the above, and/or a sensor data processing system 120 according to the above.

The present disclosure is not limited to the above but may vary within the scope of the appended claims. For example, the present disclosure is applicable for all types of vehicle sensors. As described above, at longer distances the grazing angle of the laser beam in a LIDAR vehicle sensor hitting the road may be so low that no ground return is detected, thus limiting the first region 118 at the sensor field horizon 117. The laser spot separation measured in meters across the field of view of the lidar sensor is also increasing with distance in a known manner. This has a limiting effect on how far from the vehicle 100 that the road surface geometry can be reliably estimated based on the obtained lidar data alone. For instance, small objects such as curbs and the like may fail to be detected due to the increasing spot separation.

In a similar manner, the first region 118 is limited at the sensor field horizon 117 for a radar vehicle sensor. When a camera device is used as vehicle sensor, fog or dust can limit the first region 118 at the sensor field horizon 117.

The term "road surface geometry" is intended to cover all types of road geometry.

Embodiments of the invention can be described with reference to the following numbered clauses, with preferred features laid out in the dependent clauses:
1. A method for reporting sensor data from a vehicle sensor (110) to a sensor data processing system (120), the method comprising
   obtaining (S1) an estimated road surface geometry (121) in a first region (118) that is positioned in a vicinity of the vehicle sensor (110),
   obtaining (S2) a predicted road surface geometry (122) in a second region (119) that is positioned beyond the first region (118),
   obtaining (S3) one or more sensor detections (160, 170) in the second region (119),
   determining (S4) a first sub-set of sensor detections (160) out of the one or more sensor detections (160, 170) in the second region (119) by selecting sensor detections comprised within the predicted road surface geometry (122), and
   reporting (S5) the first sub-set of sensor detections (160) as sensor data.
2. The method according to clause 1, wherein the method comprises
   obtaining (S31) one or more sensor detections (150) in the first region (118),
   determining (S41) a second sub-set of sensor detections (150) out of the one or more sensor detections (150) in the first region (118) by selecting sensor detections comprised within the estimated road surface geometry (121), and
   reporting (S51) the second sub-set of sensor detections (150) together with the first sub-set of sensor detections (160) as the sensor data.
3. The method according to any one of the clauses 1 or 2, wherein the method comprises obtaining (S11) the estimated road surface geometry (121) based on sensor data acquired by the vehicle sensor (110), wherein the sensor data is associated with a sensor field of view (115) up to a sensor field horizon (117).
4. The method according to any previous clause, wherein the method comprises obtaining (S21) a predicted road surface geometry (122) in the second region (119) based on a clothoid model.
5. The method according to clause 4, wherein the clothoid model is used to construct a piecewise linear widening of the estimated road surface geometry where a clothoid construct is parameterized based on the estimated road surface geometry.
6. The method according to any one of the clauses 1-3, wherein the method comprises obtaining (S22) a predicted road surface geometry (122) in the second region (119) based on a maximum vehicle lateral acceleration, or curvature extrapolation of the estimated road surface geometry (121) in the first region (118) .
7. The method according to any previous clause, wherein the method comprises obtaining (S23) a predicted road surface geometry (122) in the second region (119) based on a velocity (V_{ego}) of the vehicle sensor (110).
8. The method according to any previous clause, wherein the method comprises obtaining (S24) a predicted road surface geometry (122) in the second region (119) based on a detection of a target object (310) beyond the first region (118).
9. The method according to any previous clause, wherein the method comprises obtaining (S25) a predicted road surface geometry (122) in the second region (119) based on a detected obstacle (470).
10. The method according to any previous clause, wherein the method comprises obtaining (S26) a predicted road surface geometry (122) in the second region (119) based on obtained map data.
11. The method according to any previous clause, comprising receiving (S6) parameters related to a preferred road surface geometry (602), and determining (S61) a difference road surface geometry (602) within a sensor field of view (115) where there is no overlap between, on one hand, the preferred road surface geometry (601) and, on the other hand, the estimated road surface geometry (121) and the predicted road surface geometry (122).
12. The method according to clause 11, comprising reporting (S62) the difference road surface geometry (602) together with associated detections, and/or reporting (S63) the estimated road surface geometry (121) and the predicted road surface geometry (122) together with their respective associated reported detections (150, 160).
13. A sensor data processing system (120) for a vehicle sensor system (140) that comprises a vehicle sensor (110), where the sensor data processing system (120) is adapted to:
   obtain an estimated road surface geometry (121) in a first region (118) that is positioned in a vicinity of the vehicle sensor (110),
   obtain a predicted road surface geometry (122) in a second region (119) that is positioned beyond the first region (118),
   obtain one or more sensor detections (160, 170) in the second region (119),
   determine a first sub-set of sensor detections (160) out of the one or more sensor detections (160, 170) in the second region (119) by selecting sensor detections comprised within the predicted road surface geometry (122), and to
   report the first sub-set of sensor detections (160) as sensor data.
14. A vehicle (100) comprising a sensor data processing system (120) according to clause 13.
15. A remote server (180) arranged to be connected to any one of a vehicle (100), a vehicle sensor data processing system (120), and/or a vehicle sensor (110), the remote server (180) being configured to receive data relating to a road surface geometry from the vehicle (100), vehicle sensor data processing system (120), and/or vehicle sensor (110), and/or to provide data related to a road surface geometry to the vehicle (100), vehicle sensor data processing system (120), and/or vehicle sensor (110).

## Claims

1. A remote server (180) arranged to be connected to any one of a vehicle (100), a vehicle sensor data processing system (120), and/or a vehicle sensor (110), the remote server (180) being configured to receive data relating to a road surface geometry from the vehicle (100), vehicle sensor data processing system (120), and/or vehicle sensor (110), and/or to provide data related to a road surface geometry to the vehicle (100), vehicle sensor data processing system (120), and/or vehicle sensor (110).

2. The remote server of claim 1, wherein the remote server is arranged to provide a predicted road surface geometry in a second region that is positioned beyond a first region that is in the vicinity of the vehicle sensor.

3. The remote server of claim 2, wherein the remote server (180) is arranged to provide (S21) a predicted road surface geometry (122) in the second region (119) based on a clothoid model.

4. The remote server of claim 3, wherein the clothoid model is used to construct a piecewise linear widening of the estimated road surface geometry where a clothoid construct is parameterized based on the estimated road surface geometry.

5. The remote server of any of claims 2, wherein the remote server is arranged to provide the predicted road surface geometry (122) in the second region (119) based on a maximum vehicle lateral acceleration, or curvature extrapolation of the estimated road surface geometry (121) in the first region (118).

6. The remote server of claim 2, wherein the remote server is arranged to provide the predicted road surface geometry (122) in the second region (119) based on a velocity (V_{ego}) of the vehicle sensor (110).

7. The remote server of claim 2, wherein the remote server is arranged to provide the predicted road surface geometry (122) in the second region (119) based on a detection of a target object (310) beyond the first region (118).

8. The remote server of claim 2, wherein the remote server is arranged to provide the predicted road surface geometry (122) in the second region (119) based on a detected obstacle (470).

9. The remote server of claim 2, wherein the remote server is arranged to provide the predicted road surface geometry (122) in the second region (119) based on obtained map data.

10. The remote server of claim 1, wherein the remote server is arranged to provide data to the vehicle relating to possible objects in the vicinity of the vehicle.

11. The remote server of claim 10, wherein the remote server is arranged to provide data relating to possible objects from objects reporting their own location.

12. The remote server according to claim 10, wherein the remote server is arranged to provide data relating to possible objects that are objects previously **characterised by** the vehicle or another vehicle.

13. The remote server according to claim 1, wherein the data relating to the road surface geometry comprises map data.
